**Europäisches Patentamt**

**European Patent Office**

**Office européen des brevets**

(19)

(11) Numéro de publication: **0 192 000 B1**

(12) **FASCICULE DE BREVET EUROPEEN**

(45) Date de publication du fascicule du brevet:
**26.07.89**

(51) Int. Cl.⁴: **H 02 G 13/00**

(21) Numéro de dépôt: **85402358.7**

(22) Date de dépôt: **29.11.85**

(54) Paratonnerre à décharge couronne impulsionnelle intermittente.

(30) Priorité: **09.01.85 FR 8500239**

(43) Date de publication de la demande:
**27.08.86 Bulletin 86/35**

(45) Mention de la délivrance du brevet:
**26.07.89 Bulletin 89/30**

(84) Etats contractants désignés:
**AT BE CH DE FR GB IT LI LU NL SE**

(56) Documents cités:
**EP-A- 0 060 756
EP-A- 0 139 575
DE-B- 1 089 440**

(73) Titulaire: **Etablissement Public dit: CENTRE NATIONAL DE LA RECHERCHE SCIENTIFIQUE (CNRS), 15, Quai Anatole France, F-75007 Paris (FR)**

(72) Inventeur: **Goldman, Max, 5 Chemin des Buttes, F-91190 Gif/Yvette (FR)**
Inventeur: **Goldman, Alice, 5 Chemin des Buttes, F-91190 Gif/Yvette (FR)**
Inventeur: **Kuhn, Stéphane, 9, Allée des Coquelicots, F-78630 Orgeval (FR)**
Inventeur: **Langlois, Pierre-Emmanuel, 6, rue de Solférino, F-75007 Paris (FR)**
Inventeur: **Berger, Gérard, 43, rue du Moulin Vert, F-75014 Paris (FR)**

(74) Mandataire: **Martin, Jean-Jacques et al, Cabinet REGIMBEAU 26, Avenue Kléber, F-75116 Paris (FR)**

## Description

La présente invention concerne un paratonnerre à décharge couronne.

Le EP-A-0 060 756 décrit un tel type de paratonnerre, qui comprend une pointe isolée de la terre, à laquelle elle est reliée à sa base par des moyens éclateurs, cette pointe étant reliée électriquement à un générateur de tension continue positive, assez élevée pour produire une ionisation de l'atmosphère ambiante à son extrémité (décharge couronne).

La zone de plasma d'air ionisé ainsi formée à l'extrémité de la pointe possède une conductivité électrique très supérieure à celle de l'air ambiant, si bien qu'elle favorise la décharge de la foudre vers la pointe, améliorant ainsi l'efficacité et le rayon d'action du paratonnerre.

Par contre, cette augmentation de conductivité au voisinage de la pointe a pour effet de réduire localement le champ électrique et, ce faisant, de jouer un rôle inhibiteur sur le développement des aigrettes lumineuses, caractéristiques de la décharge couronne dans le cas d'une pointe portée à un potentiel positif, qui peuvent constituer un élément favorable à l'efficacité du paratonnerre.

De plus, ce dispositif ne peut jouer son rôle que dans le cas de nuages négatifs (coups de foudre de type négatif), ce qui répond à environ 90% des cas dans les pays européens et même plus lorsque l'on se place hors des régions montagneuses.

Pour répondre à ces objectifs, l'invention propose un paratonnerre tel que la décharge couronne ne soit pas produite de manière continue, mais de manière intermittente de sorte que, lors de la survenance d'une décharge, il ne subsiste plus en quantité notable au voisinage de la pointe de charges résiduelles des décharges antérieures; le potentiel appliqué pourra être de l'une et/ou l'autre polarité, selon les besoins.

A cet effet, le paratonnerre de l'invention est caractérisé en ce qu'il comporte des moyens aptes à abaisser périodiquement le potentiel de la pointe à une valeur insuffisante pour le maintien de la décharge couronne, de manière à produire des décharges couronne intermittentes et périodiques.

De la sorte, cette onde (ou cette première alternance dans le cas d'un train d'ondes) va produire une impulsion de courant qui va s'éteindre très rapidement, puisque le potentiel de la pointe, qui redescend en dessous du seuil, ne permet pas le maintien de la décharge. Ce phénomène transitoire très bref va permettre l'émission de courants instantanés maxima et la production d'autres phénomènes favorables («streamer», électron-germes, ...) assurant une efficacité maximale au paratonnerre.

Très avantageusement, la fréquence de récurrence des décharges intermittentes est au moins égale à 20 Hz.

On constate en effet que, dans ce cas, la $n^e$ aigrette produite à partir de la pointe polarisée positivement reprend le même canal spatial que la $n\text{-}1^e$, ce phénomène dit de «mémoire de canal» allant croissant au fur et à mesure que la fréquence augmente.

Ce phénomène transitoire a notamment été étudié par G. BERGER dans ses articles: «Influence of an electrical discharge on the development of a subsequent discharge in a positive point-to-plane gap» (Second International Conference on Gas Discharges, I.E.E. Publication nr. 90, LONDON 1972) et «Influence of a Corona discharge on the subsequent one in atmospheric air» (Third International Conference on Gas Discharges, I.E.E. Publication nr. 118, LONDON 1974) et par G. HARTMANN et I. GALLIMBERTI dans leur article «The influence of metastable molecules on streamer progression» (J. PHYS. D., 8, 1975, P. 670–680).

Très avantageusement également, la fréquence de récurrence des décharges intermittentes est au plus égale à 2000 Hz.

On constate en effet que, pour des fréquences supérieures à quelques kHz, le surcroît d'efficacité du paratonnerre va décroissant, en se rapprochant de plus en plus de celle d'un paratonnerre produisant une décharge couronne continue.

De préférence, la durée pendant laquelle le potentiel de la pointe est supérieur au seuil de tension produisant l'effet couronne est au moins égale à 1 μs et au plus égale à 100 μs; cette gamme de valeurs permet d'obtenir une décharge couronne avec une quasi-certitude, palliant toutes les fluctuations des paramètres aléatoires susceptibles d'empêcher l'apparition de l'effet couronne.

De préférence, l'amplitude crête du potentiel de la pointe est au moins égale à 110% du seuil de tension produisant l'effet couronne.

On se place ainsi juste au-dessus du seuil, accroissant d'autant le caractère transitoire du phénomène de décharge, ce qui favorise l'obtention de courants instantanés maxima dans tous les cas. (Ici et dans la suite, on considère que le seuil en question est le même quel que soit la polarité, négative ou positive, ce qui correspond généralement aux valeurs rencontrées dans la pratique. Si toutefois les seuils respectifs présentaient, en valeur absolue, une différence importante, on procèderait aux ajustements nécessaires pour que les conditions énoncées restent remplies, sans pour autant sortir du cadre de la présente invention).

Une première possibilité consiste à relier électriquement la pointe à des moyens générateurs de courant aptes à produire des ondes récurrentes de courant, déchargées dans l'atmosphère environnant la pointe, de manière à produire des décharges couronne intermittentes avec la même fréquence de récurrence.

Une autre possibilité consiste à relier électriquement la pointe à des moyens générateurs de potentiel, tels que le potentiel appliqué à la pointe par les moyens générateurs soit un potentiel variable, en forme d'ondes récurrentes ou de trains d'ondes récurrents, et tels que, compte tenu éventuellement de l'amplification naturelle procurée par le champ électrique ambiant existant en cas d'orage, l'amplitude crête de l'onde ou de la première demi-alternance du train ayant une polarité opposée à celle de l'atmosphère ambiante soit, en valeur absolue, supérieure au seuil de tension produisant l'effet couronne.

Dans ce cas, le potentiel appliqué à la pointe peut être tel que, quelle que soit l'amplification naturelle éventuellement procurée par le champ électrique ambiant, l'amplitude crête de l'onde ou de la première alternance du train ayant une polarité opposée à celle de l'atmosphère ambiante est toujours, en valeur absolue, supérieure au seuil de tension produisant l'effet couronne.

Par ailleurs, dans le cas d'un train d'ondes, les amplitudes crête de toutes les demi-alternances subséquentes de même polarité que le nuage sont, en valeur absolue, avantageusement inférieures audit seuil.

Dans un premier mode de réalisation, les moyens générateurs produisent des trains d'ondes alternaitves amorties, et la valeur absolue de l'amplitude crête des deux premières demi-alternances est supérieure au seuil de tension produisant l'effet couronne, de manière à toujours produire cet effet quelle que soit la polarité de l'atmosphère ambiante.

Dans un second mode de réalisation, les moyens générateurs produisent des dents de scie ou des trains de dents de scie sans passage par zéro, de polarité positive.

En particulier, les moyens générateurs comportent dans ce cas un circuit de type RLC ou RC, relié d'une part à la pointe et d'autre part à un générateur de potentiel élevé; la résistance R peut notamment être une résistance interposée entre la pointe et le générateur, et la capacité C être constituée par la capacité répartie parasite du paratonnerre entre sa pointe et la terre.

Par ailleurs, la présence de la résistance, outre sa participation à la production des variations périodiques de haute tension à la pointe du paratonnerre, va d'une part limiter la consommation et augmenter l'autonomie du générateur de potentiel, et d'autre part le protéger contre les coups de foudre en dérivant le courant de décharge de la foudre vers l'éclateur, d'autant plus efficacement que sa valeur sera plus élevée.

Par ailleurs, du fait que le potentiel de la pointe ne repasse pas par zéro (il suffit qu'il redescende très rapidement au-dessous du seuil d'extinction du phénomène couronne), la tension résiduelle va assurer le drainage des ions après extinction de la décharge; la fréquence de fonctionnement du paratonnerre pourra alors être corrélativement augmentée.

D'autres caractéristiques et avantages de l'invention apparaîtront à la lecture de la description détaillée ci-dessous, faite en référence aux dessins annexés, sur lesquels:

— la figure 1 montre les variations de tension et de courant dans la pointe, dans le cas où celle-ci est soumise à un potentiel en forme de trains d'ondes alternatives amorties,

— la figure 2 est une variante de la figure 1, dans le cas où l'on utilise l'amplification naturelle procurée par le milieu ambiant,

— la figure 3 illustre le cas dans lequel le potentiel appliqué à la pointe est un potentiel en forme de dents de scie sans passage par zéro,

— les figures 4 à 6 illustrent schématiquement différents circuits permettant d'obtenir les effets enseignés par l'invention,

— les figures 7 et 8 montrent le schéma électrique et une disposition des éléments, pour un exemple de réalisation dans lequel la pointe est soumise à un potentiel variable en dents de scie.

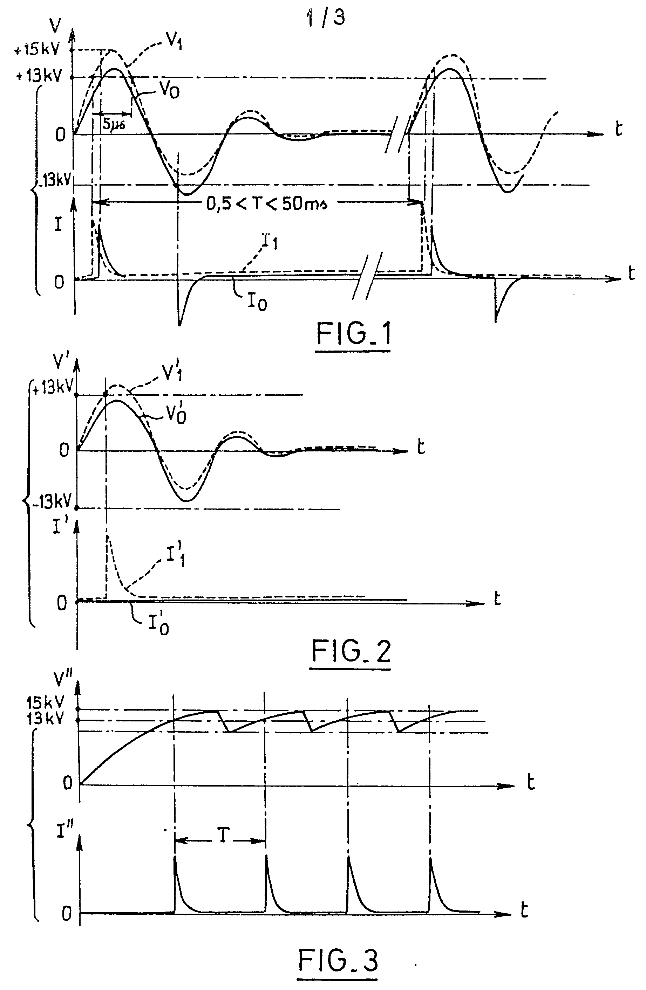

La figure 1 se rapporte au mode de réalisation dans lequel la pointe est soumise à un potentiel variable en forme de trains d'ondes alternatives amorties.

Les courbes de tension et de courant correspondent auxparamètres suivants:

— $V_0$: tension présente sur la pointe en l'absence de champ électrique ambiant (cette tension étant donc égale au potentiel fourni à la pointe par le générateur),

— $V_1$: potentiel de la pointe compte tenu de l'amplification procurée par le champ électrique ambiant existant en cas d'orage; on se place dans l'hypothèse d'un nuage négatif, par exemple; comme on peut le constater, la demi-alternance positive va se trouver amplifiée, tandis que la demi-alternance négative va se trouver atténuée,

— $I_0$: courant parcourant la pointe (et donc courant déchargé dans l'atmosphère ambiante) en l'absence de champ électrique ambiant; on remarque que, chaque fois que le potentiel $V_0$ de la pointe dépasse, en valeur absolue, le seuil d'apparition de la décharge couronne (ici, indiqué par exemple à 13 kV), une brusque décharge de courant, positif ou négatif selon le potentiel de la pointe, est produite.

— $I_1$: courant parcourant la pointe, compte tenu de l'amplification procurée par le champ électrique ambiant (nuage négatif dans cet exemple): on constate que la première impulsion, positive, est amplifiée, tandis que la seconde impulsion, qui était négative, a pratiquement disparu, puisque la valeur crête de la première demi-alternance négative se trouve désormais au-dessous du seuil de tension.

La périodicité des trains d'ondes est comprise entre 0,5 et 50 ms, ce qui correspond à une fréquence de récurrence comprise entre 20 et 2000 Hz.

L'amplitude crête de la première demi-alternance positive et de la première demi-alternance négative sont choisies de manière à se trouver, en l'absence de champ électrique ambiant, très légèrement au-dessus du seuil de tension produisant la décharge, les autres demi-alternances du train d'ondes ayant une amplitude toujours inférieure à ce seuil. Ainsi, on n'obtiendra qu'une seule impulsion de courant efficace par train d'ondes, la première impulsion négative (dans l'exemple) se trouvant étouffée dès qu'un champ électrique ambiant apparaît; le point important étant de ménager une durée T suffisante pour que le «matelas» de charges accumulées au voisinage de la pointe puisse se dissiper.

Sur la figure, le potentiel $V_1$ de la pointe dépasse, au cours de la première demi-alternance positive, le seuil d'apparition de l'effet couronne pendant une durée d'environ 5 µs, la tension crête atteinte étant d'environ 15 kV. Cette durée très courte permet de conserver à l'impulsion de courant son caractère transitoire qui, comme on l'a indiqué plus haut, est un facteur important de performance du paratonnerre.

La figure 2 illustre une variante de la figure 1, dans laquelle le potentiel $V'_0$ en l'absence de champ ambiant est plus faible que dans le cas précédent (ce qui est donc, du point de vue technique, plus facile à réaliser), mais reste en dessous du seuil d'apparition de l'effet couronne. La valeur crête de ce potentiel $V'_0$ est choisie de telle sorte que, en présence du champ électrique ambiant existant en cas d'orage, le potentiel résultant $V'_1$ vienne dépasser le seuil d'apparition de l'effet couronne. On obtiendra alors une impulsion de courant $L'_1$, comme dans le cas précédent; on notera que le courant $I'_0$ en l'absence de champ électrique ambiant est nul, puisque la décharge n'apparaît que si un champ électrique ambiant est présent.

Sur la figure 3 on a illustré les courbes de tension et de courant dans le cas où le générateur produit une tension en dents de scie, sans passage par zéro. La valeur crête de la dent de scie est choisie à une valeur (15 kV par exemple) légèrement supérieure au seuil de tension déclenchant l'effet couronne (13 kV dans cet exemple) de façon à produire, comme précédemment, de brèves impulsions de courant.

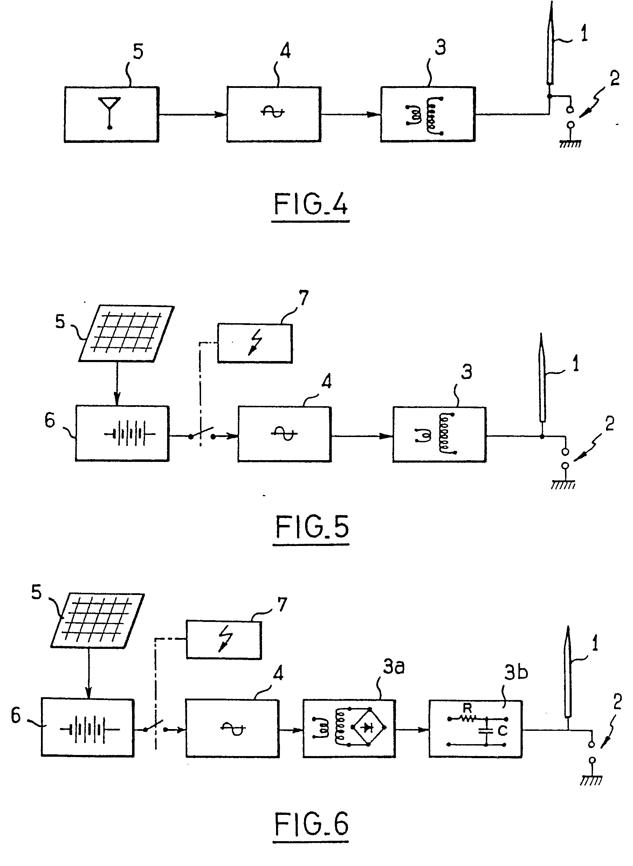

Les figures 4 à 6 illustrent des exemples de circuits pour la mise en œuvre de l'invention.

Dans les trois cas, il est prévu une pointe de paratonnerre 1, isolée de la terre et reliée à celle-ci par des moyens éclateurs 2, qui peuvent être des moyens purement statiques (deux éléments métalliques séparés par un intervalle d'air), ou dynamiques, fonctionnant comme un interrupteur commandé.

Cette pointe est reliée à des moyens générateurs de haute tension 3 en aval d'un système oscillateur 4 alimenté par une source d'énergie 5.

Dans le cas de la figure 4, l'oscillateur 4 est un oscillateur de type classique, créant des signaux de la fréquence de récurrence recherchée, et le générateur de haute tension 3 est un transformateur du type transformateur d'impulsions. Le dispositif d'alimentation 5 puise avantageusement son énergie dans le champ électrique ambiant, ce qui procure au dispositif uen complète autonomie. On récupère et on transforme pour cela le courant que l'on obtient lorsqu'on plonge une pointe relativement longue dans un champ électrique très grand et croissant rapidement, ce qui est le cas du champ électrique ambiant existant en cas d'orage.

Dans le cas de la figure 5, le dispositif d'alimentation 5 est un panneau solaire chargeant une batterie 6, qui alimente sélectivement l'oscillateur 4 par l'intermédiaire d'un détecteur d'orage 7 empêchant un fonctionnement continu du système en dehors des périodes à risques.

La figure 6 correspond au mode de réalisation dans lequel une tension en dents de scie est produite (courbes tension et courant de la figure 3): la structure est identique à celle du dispositif de la figure 5, le transformateur d'impulsions 3 étant remplacé par un ensemble constitué d'un transformateur haute tension et d'un redresseur 3a pour reproduire une tension continue (ou, tout au moins, redressée) alimentant un circuit RC 3b produisant les dents de scie appliquées à la pointe du paratonnerre.

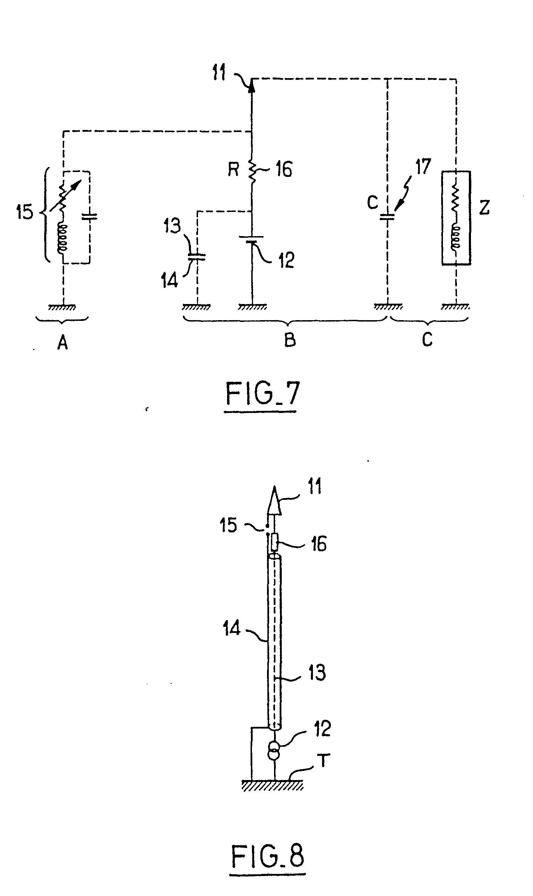

Une réalisation particulière du dispositif de la figure 6 est illustrée figure 7 (schéma équivalent) et 8 (disposition des éléments), cette réalisation étant remarquable en ce que l'on utilise la capacité répartie du paratonnerre entre sa pointe et la terre comme élément constitutif du circuit RC.

Plus précisément, le paratonnerre représenté comprend de manière connue, une pointe effilée conductrice 11 et un générateur de potentiel continu 12. Ce dernier est relié électriquement d'une part à la terre T, d'autre part à la pointe 11 par un câble conducteur 13. Le conducteur 13 est l'âme d'un câble coaxial dont le blindage, c'est-à-dire la gaine extérieure conductrice 14, est relié électriquement d'une part directement à la terre T, d'autre part, via un éclateur 15, à la pointe 11. La pointe et l'éclateur sont par exemple du type décrit dans le EP-A-0 060 756 précité.

Conformément à l'invention, le paratonnerre est pourvu d'une résistance de valeur élevée, désignée par 16, interposée sur le conducteur 13 entre le générateur 12 et la pointe 11 auprès de laquelle elle est placée.

Le circuit équivalent représenté à la figure 7 comprend l'éclateur de protection A, le circuit de charge B et le circuit de décharge C.

Tout d'abord, la pointe 11 est reliée au générateur de potentiel 12 par la résistance 16 de valeur R; à partir d'une certaine tension présente à la pointe, correspondant à l'apparition de l'effet couronne, ce circuit va se refermer vers la terre par l'impédance équivalente Z de l'atmosphère ambiante. Le courant circulant alors dans cette maille correspond au courant créé au voisinage de la pointe.

La capacité en parallèle avec le générateur présentée par le câble coaxial 13, 14 est de l'ordre de 50 à 100 pF par mètre de câble, et intervient peu dans le fonctionnement électrique du dispositif, en régime permanent.

L'éclateur 15 est équivalent à un condensateur en parallèle avec une résistance variable et une inductance montées en série. Cette branche a été représentée en traits interrompus, pour mémoire, car sa fonction s'exerce seulement au moment du coup de foudre alors qu'au contraire l'arrangement qui fait l'objet de l'invention intervient avant le coup de foudre, pour, au moment voulu, favoriser la canalisation de la foudre vers le paratonnerre et augmenter le rayon d'action de celui-ci avec un maximum d'efficacité.

Enfin, la référence 17 désigne la capacité parasite existant entre la pointe et la masse (cette masse est en fait répartie, la fermeture du circuit s'effectuant de façon diffuse); celle-ci est de l'ordre du picofarad, par exemple 5 pF. Elle pourra être éventuellement modifiée par la position de la résistance 16 ou par une capacité additionnelle, soit augmentée pour accroître l'énergie dissipée dans les impulsions de décharge, inhérentes au fonctionnement de celle-ci, soit réduite pour assurer la chute de tension à la pointe nécessaire au désamorçage de la décharge.

Lorsque le générateur 12 se trouve – manuellement ou automatiquement – mis en fonctionnement, la capacité C vient se charger par le courant du générateur traversant la résistance R; le seuil d'apparition de l'effet couronne n'étant pas encore atteint, l'impédance Z peut en effet être considérée comme quasiment infinie (absence de flux d'air ionisé). Lorsque ce seuil est atteint, la capacité C est déchargée brusquement dans l'impédance Z, provoquant une brève ionisation de l'air au voisinage de la pointe du paratonnerre.

On notera que cette ionisation et le courant qu'elle induit dans le paratonnerre sont temporaires, la résistance R étant trop élevée pour permettre une circulation permanente de courant dans l'impédance Z, comme c'était le cas pour les paratonnerres ionisants de la technique antérieure. Ici, au contraire, le courant permanent qui transiterait par l'impédance Z en l'absence de phénomène de relaxation a une valeur négligeable par rapport au courant de décharge de la capacité C.

Une fois la décharge désamorcée, la capacité 17 se recharge à travers R, et le cycle recommence de manière périodique.

La valeur R de la résistance 16 est avantageusement de quelques centaines de mégohms, par exemple de 400 M $\Omega$. La capacité C est de l'ordre du picofarad, par exemple de 5 pF.

Dans cet exemple, la constante de temps RC du circuit est alors de $2.10^{-3}$s, ce qui donne une fréquence d'impulsions de 500 Hz environ.

Le potentiel (par rapport à la terre) produit par le générateur 2 est compris entre quelques kilovolts et quelques dizaines de kilovolts, voire même quelques centaines de kilovolts. Ce générateur est du même type que celui utilisé pour un paratonnerre ionisant à régime de décharge permanent.

**Revendications**

1. Paratonnerre à décharge couronne, comportant une pointe (1) isolée de la terre, la base de cette pointe étant reliée à la terre par des moyens éclateurs (2), ce paratonnerre étant apte à produire une ionisation de l'atmosphère ambiante à l'extrémité de la pointe, caractérisé en ce qu'il comporte des moyens (3, 4, 5, 6) aptes à abaisser périodiquement le potentiel de la pointe (1) à une valeur insuffisante pour le maintien de la décharge couronne, de manière à produire des décharges couronne intermittentes et périodiques.

2. Paratonnerre selon la revendication 1, dans lequel la fréquence de récurrence des décharges intermittentes est au moins égale à 20 Hz.

3. Paratonnerre selon l'une des revendications 1 et 2, dans lequel la fréquence de récurrence des décharges intermittentes est au plus égale à 2000 Hz.

4. Paratonnerre selon l'une des revendications 1 à 3, dans lequel la durée pendant laquelle le potentiel de la pointe est supérieur au seuil de tension produisant l'effet couronne est au moins égale à 1 µs.

5. Paratonnerre selon l'une des revendications 1 à 4, dans lequel la durée pendant laquelle le potentiel de la pointe est supérieur au seuil de tension produisant l'effet couronne est au plus égale à 100 µs.

6. Paratonnerre selon l'une des revendications 1 à 5, dans lequel l'amplitude crête du potentiel de la pointe (1) est au moins égale à 110% du seuil de tension produisant l'effet couronne.

7. Paratonnerre selon l'une des revendications 1 à 6, dans lequel le pointe (1) est reliée électriquement à des moyens générateurs de courant aptes à produire des ondes récurrentes de courant, déchargées dans l'atmosphère environnant la pointe, de manière à produire des décharges couronne intermittentes avec la même fréquence de récurrence.

8. Paratonnerre selon l'une des revendications 1 à 6, dans lequel la pointe (1) est reliée électriquement à des moyens générateurs de potentiel (3), tels que le potentiel appliqué à la pointe (1) par les moyens générateurs (3) soit un potentiel variable en forme d'ondes récurrentes ou de trains d'ondes récurrents, et tels que, compte tenu éventuellement de l'amplification naturelle procurée par le champ électrique ambiant existant en cas d'orage, l'amplitude crête de l'onde (V, V1) ou de la première demi-alternance du train ayant une polarité opposée à celle de l'atmosphère ambiante soit, en valeur absolue, supérieure au seuil de tension produisant l'effet couronne.

9. Paratonnerre selon la revendication 8, dans lequel, quelle que soit l'amplification naturelle éventuellement procurée par le champ électrique ambiant, l'amplitude crête de l'onde (Vo) ou de la première alternance du train ayant une polarité opposée à celle de l'atmosphère ambiante est toujours, en valeur absolue, supérieure au seuil de tension produisant l'effet couronne.

10. Paratonnerre selon l'une des revendications 8 et 9, dans lequel en outre, dans le cas d'un train d'ondes, les amplitudes crête de toutes les demi-alternances subséquentes de même polarité que le nuage sont, en valeur absolue, inférieures audit seuil.

11. Paratonnerre selon l'une des revendications 8 à 10, dans lequel les moyens générateurs (3) produisent des trains d'ondes alternatives amorties, et la valeur absolue de l'amplitude crête des deux premières demi-alternances (V1, Vo) est supérieure au seuil de tension produisant l'effet couronne, de manière à toujours produire cet effet quelle que soit la polarité de l'atmosphère ambiante.

12. Paratonnerre selon l'une des revendications 8 à 10, dans lequel les moyens générateurs (3a, 3b) produisent des dents de scie ou des trains de dents de scie sans passage par zéro, de polarité positive.

13. Paratonnerre selon la revendication 12, dans lequel les moyens générateurs comportent un circuit de type RLC ou RC (3b), relié d'une part à la pointe et d'autre part à un générateur de potentiel élevé.

14. Paratonnerre selon la revendication 13, dans lequel la résistance R est une résistance interposée entre la pointe (1) et le générateur (3a), et la capacité C est constituée par la capacité répartie parasite du paratonnerre entre sa pointe (1) et la terre.

**Patentansprüche**

1. Blitzableiter mit Korona-Entladung, der eine gegenüber der Erde isolierte Spitze (1) aufweist, deren Fuss mit der Erde über Entlademittel (2) verbunden ist, wobei der Blitzableiter die das Ende der Spitze umgebende Atmosphäre ionisiert, dadurch gekennzeichnet, dass Mittel (3, 4, 5, 6) zum periodischen Absenken des Potentials der Spitze (1) auf einen Wert vorgesehen sind, der nicht zum Aufrechterhalten der Korona-Entladung ausreicht, derart, dass intermittierende und periodische Korona-Entladungen erzeugt werden.

2. Blitzableiter nach Anspruch 1, bei dem die Frequenz der intermittierenden Entladungsfolgen mindestens 20 Hz beträgt.

3. Blitzableiter nach Anspruch 1 oder 2, bei dem die Frequenz der intermittierenden Entladungsfolgen höchstens gleich 2000 Hz ist.

4. Blitzableiter nach einem der Ansprüche 1 bis 3, bei dem die Dauer, während welcher das Spitzenpotential oberhalb der Schwellenspannung für eine Korona-Entladung liegt, mindestens gleich eine µs ist.

5. Blitzableiter nach einem der Ansprüche 1 bis 4, bei dem die Dauer, während der das Spitzenpotential oberhalb der Schwellenspannung für eine Korona-Entladung liegt, mindestens 100 µs beträgt.

6. Blitzableiter nach einem der Ansprüche 1 bis 5, bei dem die maximale Amplitude des Potentials der Spitze (1) mindestens gleich 110% der Schwellenspannung für eine Korona-Entladung ist.

7. Blitzableiter nach einem der Ansprüche 1 bis 6, bei dem die Spitze (1) elektrisch mit stromerzeugenden Mitteln verbunden ist, welche Strom-Wellenfolgen erzeugen können, die in die Umgebungsatmosphäre der Spitze entladen werden, derart, dass intermittierende Korona-Entladungen gleicher Folgefrequenz erzeugt werden.

8. Blitzableiter nach einem der Ansprüche 1 bis 6, bei dem die Spitze (1) elektrisch mit potentialerzeugenden Mitteln (3) verbunden ist, derart, dass das an die Spitze (1) mittels der potentialerzeugenden Mittel (3) angelegte Potential ein variables Potential in Form von Wellenfolgen oder Wellenzügen derart ist, dass aufgrund eventueller natürlicher Verstärkung, welche durch das im Falle eines Gewitters herrschende elektrische Umgebungsfeld erzeugt wird, die maximale Amplitude der Welle (V, V1) oder der ersten Halbfolge des Wellenzuges mit einer Polarität entgegengesetzt derjenigen der Umgebungsatmosphäre als Absolutwert oberhalb der Schwellenspannung für eine Korona-Entladung liegt.

9. Blitzableiter nach Anspruch 8, bei dem unabhängig von der eventuellen natürlichen Verstärkung, welche durch das elektrische Umgebungsfeld erzeugt wird, die maximale Amplitude der Welle (Vo) oder der ersten Halbfolge des Wellenzuges mit einer Polarität entgegengesetzt derjenigen der Umgebungsatmosphäre als Absolutwert gesehen stets oberhalb der Schwellenspannung für eine Korona-Entladung liegt.

10. Blitzableiter nach Anspruch 8 oder 9, bei dem ausserdem im Falle eines Wellenzuges die maximalen Amplituden aller aufeinanderfolgenden Halbfolgen gleicher Polarität wie der von der Bewölkung als Absolutwert gesehen unterhalb der genannten Schwelle liegen.

11. Blitzableiter nach einem der Ansprüche 8 bis 10, bei dem die potentialerzeugenden Mittel (3) alternative gedämpfte Wellenzüge erzeugen und der Absolutwert der maximalen Amplitude der beiden ersten Halbfolgen (V1, Vo) oberhalb der die Korona-Entladung erzeugenden Schwellenspannung liegt, derart, dass diese Wirkung unabhängig von der Polarität der Umgebungsatmosphäre stets erzeugt wird.

12. Blitzableiter nach einem der Ansprüche 8 bis 10, bei dem die potentialerzeugenden Mittel (3a, 3b) Sägezähne oder sägezahnförmige Wellenzüge ohne Nulldurchgang mit positiver Polarität erzeugen.

13. Blitzableiter nach Anspruch 12, bei dem die potentialerzeugenden Mittel eine Schaltung des Typs RLC oder RC (3b) umfassen, welche einerseits mit der Spitze und andererseits mit einem Erzeuger angehobenen Potentials verbunden ist.

14. Blitzableiter nach Anspruch 13, bei dem der Widerstand (R) ein zwischen die Spitze (1) und den Erzeuger (3a) eingeschalteter Widerstand ist und die Kapazität (C) durch die verteilte parasitäre Kapazität des Blitzableiters zwischen seiner Spitze (1) und der Erde gebildet ist.

**Claims**

1. Corona discharge lightning rod comprising a tip (1) which is isolated from the ground, the base of said tip being connected to the ground via discharger means (2), said lightning rod being suitable for ionizing the ambient atmosphere around the end of said tip, characterized by said lightning rod further including means (3, 4, 5, 6) suitable for periodically reducing the potential of said tip (1) to a value which is too small to maintain a corona discharge, thereby producing periodic and intermittent corona discharge pulses.

2. Lightning rod according to claim 1, wherein the recurrence frequency of said intermittent discharges is not less than 20 Hz.

3. Lightning rod according to claim 1 or 2, wherein the recurrence frequency of said intermittent discharges is not more than 2000 Hz.

4. Lightning rod according to claim 1, wherein the period during which the potential at said point is greater than the threshold voltage producing the corona effect is not less than 1 µs.

5. Lightning rod according to any preceding claims 1 to 4, wherein the period during which the potential at said tip is greater than the threshold voltage at which the corona effect is produced is not more than 100 µs.

6. Lightning rod according to any preceding claim 1 to 5, wherein the peak amplitude of the potential at said tip (1) is not less than 110% of the threshold voltage for producing the corona effect.

7. Lightning rod according to any preceding claim 1 to 6, wherein said tip (1) is electrically connected to current generator means suitable for producing recurrent current waves, said waves being discharged into the atmosphere surrounding said tip in such a manner as to produce intermittent corona discharges at the same recurrence frequency.

8. Lightning rod according to any preceding claim 1 to 6, wherein said tip (1) is electrically connected to potential generator means (3), in such a manner that the potential applied to said tip (1) by said generator means (3) is a variable potential in the form of recurrent waves or trains of recurrent waves, and such that the absolute value, optionally taking account of the natural amplification which occurs due to the ambient electric field which exists during a thunderstorm, of the peak amplitude of said waves (V, V1) or of the first half cycle of said train of waves having the opposite polarity to that of the ambient atmosphere is greater than the threshold voltage at which the corona effect is produced.

9. Lightning rod according to claim 8, wherein, regardless of the natural amplification that may be provided by the ambient electric field, the absolute value of the peak amplitude (Vo) of the said wave or of said first half cycle of opposite polarity to the ambient atmosphere is always greater than the threshold voltage at which the corona effect is produced.

10. Lightning rod according to any claim 8 or 9, wherein the generator means produce trains of recurrent pulses, and wherein the absolute values of the peak amplitudes of all subsequent half cycles of the same polarity as the cloud after said first half cycle of the same polarity in a train of waves are less than said threshold.

11. Lightning rod according to any preceding claim 8 to 10, wherein the generator means (3) produce trains of damped alalternating waves, and wherein the absolute value of the peak amplitude of the first two half cycles (V1, Vo) is greater than the threshold voltage at which the corona effect occurs, thereby ensuring that the corona effect always occurs regardless of the polarity of the ambient atmosphere.

12. Lightning rod according to any preceding claim 8 to 10, wherein the generator means (3a, 3b) produce a sawtooth or a train of sawteeth of positive polarity and without zero crossings.

13. Lightning rod according to claim 12, wherein the generator means comprise an RC (3b) or an RLC type circuit connected between the tip of the lightning rod and a generator of high potential.

14. Lightning rod according to claim 13, wherein the resistance R is a resistance connected in series between the tip (1) and the generator (3a), and wherein the capacitance C thereof is constituted by the distributed stray capacitance of the lightning rod between its tip (1) and ground.

FIG_1

FIG_2

FIG_3

FIG.4

FIG.5

FIG.6

3 / 3

FIG_7

FIG.8